# EUROPÄISCHE PATENTSCHRIFT

(11) **EP 2 122 600 B1**
(45) Veröffentlichungstag und Bekanntmachung des Hinweises auf die Patenterteilung: **16.11.2016**
(21) Anmeldenummer: 08706892.0
(22) Anmeldetag: 15.02.2008
(51) Int. Cl.: G09B 23/28, A61B 1/00

(54) **ERCP TRAININGSMODELL (ERCP-TM) FÜR ENDOSKOPISCHE DIAGNOSTIK UND THERAPIE IM BEREICH DES PANKREO-BILIÄREN SYSTEMS**
ERCP TRAINING MODEL (ERCP TM) FOR ENDOSCOPIC DIAGNOSTICS AND THERAPY OF THE PANCREO-BILIARY SYSTEM
MODÈLE D'APPRENTISSAGE CE CHOLANGIOPANCRÉATOGRAPHIE RÉTROGRADE ENDOSCOPIQUE (ERCP-TM) POUR DIAGNOSTIC ENDOSCOPIQUE ET THÉRAPIE DANS LE DOMAINE DU SYSTÈME PANCRÉATOBILIAIRE

(30) Priorität: 20.02.2007 DE 102007008205
(43) Veröffentlichungstag der Anmeldung: 25.11.2009
(73) Patentinhaber: Frimberger, Eckart, 80804 München (DE)
(72) Erfinder: Frimberger, Eckart, 80804 München (DE)
(74) Vertreter: Eder, Christian
(86) Internationale Anmeldenummer: PCT/DE2008/000283
(87) Internationale Veröffentlichungsnummer: WO 2008/101477

(56) Entgegenhaltungen:
- WO-A-01/88882
- DE-U1-202004 006 035
- US-A- 3 376 659
- US-A- 5 403 191
- NEUMANN M ET AL: "ERLANGEN BRONCHO-TRAINER - NEWLY DEVELOPED TRAINING MODEL WITH PHYSIOLOGICAL VENTILATION FOR INTERVENTIONAL BRONCHOSCOPY" 1. Januar 2005 (2005-01-01), PNEUMOLOGIE, THIEME, STUTTGART, DE, PAGE(S) 18 - 21 , XP009079130 ISSN: 0934-8387 das ganze Dokument
- PEIFER J W ET AL: "APPLIED VIRTUAL REALITY FOR SIMULATION OF ENDOSCOPIC RETROGRADE CHOLANGIO-PANCREATOGRAPHY (ERCP)" MEDICINE MEETS VIRTUAL REALITY CONFERENCE, XX, XX, 17. Januar 1996 (1996-01-17), Seiten 36-42, XP001035268

## Beschreibung

Die Erfindung bezieht sich auf ein Trainingsmodell für endoskopische Diagnostik und Therapie, insbesondere im Bereich des pankreo-biliären Systems.

Derartige Trainingsmodelle finden in der medizinischen Ausbildung oder Weiterbildung von Ärzten Anwendung, um das Erlernen der verschiedenen Methoden der Endoskopie zu erleichtern. Derzeit erlernen Ärzte die verschiedenen Methoden an Endoskopie-Trainingsmodellen und/oder unter Anleitung durch einen erfahrenen Kollegen am Patienten.

Der endoskopische Eingriff zum Zweck der Diagnostik und/oder Therapie im Bereich der Gallenwege und des Ganges der Bauchspeicheldrüse (bilio-pankreatisches System) heißt endoskopisch retrograde Cholangio-Pankreatikographie, abgekürzt ERCP.

Bei der reinen diagnostischen Untersuchung geht es lediglich darum, mit dem Endoskop die benötigten Instrumente in den zu untersuchenden Organbereich einzuführen und die infrage kommenden krankhaften Veränderungen zu erkennen. Bei der therapeutischen Endoskopie werden erkannte krankhafte Veränderungen behandelt. Bei der endoskopischen Untersuchung wird zunächst das für diesen Bereich konzipierte Endoskop, das Seitblick-Duodenoskop, durch Mund, Speiseröhre, Magen, in den Zwölffingerdarm bis zu der Stelle eingeführt, wo der Gallengang und der Gang der Bauchspeicheldrüse mündet.

Die Mündungsstelle ist jedoch eine nur wenige Millimeter große rundliche oder längliche Erhebung der Wand des Zwölffingerdarmes mit einer winzigen Öffnung, die zu den Gängen der Bauchspeicheldrüse und des Gallenganges führt. Die Erhebung mit der Öffnung heißt Papille.

Bei der ERCP geht es zunächst darum, in die Öffnung der Papille durch den Instrumentierkanal des Endoskops eine Sonde mit einem Durchmesser von 0.5-2,5mm einzuführen. Durch diese Sonde wird Kontrastmittel in die Gänge eingespritzt, wodurch diese im Röntgenbild sichtbar werden. So können Veränderungen im Bereich der Gänge, wie beispielsweise tumorbedingte Verengungen, die den Abfluss der Galle oder des Saftes der Bauchspeicheldrüse behindern, erkannt werden. Auch andere Veränderungen wie das Vorliegen von Steinen im Gallengang können so diagnostiziert werden.

Die ERCP wird vom Endoskopiker unter optischer Kontrolle durchgeführt. Hierzu sind zwei üblicherweise nebeneinander angeordnete Monitore erforderlich. Hierbei zeigt der Endoskopie-Monitor das endoskopische Bild, nach Platzierung des Endoskops den Zwölffingerdarm (Duodenum) mit der Papille, und der andere Monitor (Röntgenmonitor) zeigt das Röntgenbild mit den Gallenwegen und den Gang der Bauchspeicheldrüse (Pankreasgang). Die Gänge werden allerdings erst nach Instillation von Kontrastmittel über eine mit dem Endoskop in die genannten Gänge eingeschobene Sonde röntgenologisch sichtbar.

Mit der Methode der ERCP können aber nicht nur krankhafte Veränderungen erkannt, sondern auch therapiert werden. Zumeist muss zur Durchführung der Therapie die Papille zunächst durch einen kleinen Schnitt mit einer Sonde (Papillotom) erweitert werden (Papillotomie), um mit den erforderlichen therapeutischen Instrumenten in die Gänge zu den krankhaften Veränderungen zu gelangen. Derartige therapeutische Instrumente können beispielsweise Draht-Körbchen für die Extraktion von Steinen aus dem Gallengang sein oder kurze Drainageschläuche (Stents), die den Abfluss der Galle oder des Saftes der Bauchspeicheldrüse bei tumorbedingten Verengungen wieder herstellen.

Alle vorgenannten Manipulationen sind jedoch risikoreich und können zu relevanten Komplikationen, im Extremfall zum Tod des Patienten führen. Das Komplikationsrisiko nimmt erst mit der Erfahrung des Untersuchers ab.

Um es dem in der jeweiligen Methode unerfahrenen Arzt zu ermöglichen, die Grundzüge der ERCP praxisnah zu erlernen, wären Trainingsmodelle für die Diagnostik und Therapie wünschenswert, welche die anatomischen Gegebenheiten des Menschen simulieren.

Bei derzeit verfügbaren ERCP-Trainingsmodellen handelt es sich meist um reine Biomodelle, d.h. lebende Tiere, beispielsweise Schweine oder künstliche Modelle, in welche Organpakete oder Organteile von geschlachteten Tieren eingesetzt werden können. Alle vorgenannten Modelle besitzen jedoch folgende spezifische Nachteile.

### Biomodelle

Das ERCP-Training an lebenden Tieren kann nur in speziellen Institutionen mit Erfahrung mit Vorbereitung und Betäubung der Tiere durchgeführt werden. Hierzu ist neben den entsprechenden Räumlichkeiten auch geschultes Personal einschließlich einem Veterinärmediziner erforderlich. Zudem unterscheidet sich die Anatomie der Tiere in den entscheidenden Bereichen von der Anatomie des Menschen.

Bei Verwendung von Organpaketen toter Tiere ist der Gesamtaufwand geringer. Aufwändig ist jedoch die Beschaffung der Organpakete vom Schlachthof und ihre Vorbereitung zur Durchführung der ERCP. Die Organpakete werden hierzu unter anderem an Haltevorrichtungen, die zum Teil den Bauchbereich des Menschen simulieren, befestigt. Ein derartiges Modell für die Bronchoskopie ist beispielsweise aus der Neumann et al: "Erlangen Broncho-Trainer - Newly developed training model with physiological ventilation for interventional bronchioscopy" 1. Januar 2005 (2005-01-01) Pneumologie, Thieme, Stuttgart, DE, page(s) 18-21, XP009079130, ISSN: 0934-8387 bekannt.

Weitere Nachteile der Biomodelle bestehen darin, dass sie die Anatomie des Menschen in relevanten Details nicht wiedergeben. So münden beim Schwein der Gallengang und der Gang der Bauchspeicheldrüse nicht gemeinsam in der Papille, sondern getrennt. Somit kann eine Hauptschwierigkeit der ERCP, nämlich die schwierige gezielte Sondierung der beiden Gänge via Papille, hier nicht erlernt werden.

Ein weiterer gravierender Negativaspekt besteht darin, dass die für die ERCP außerordentlich wichtige Papillotomie am Tiermodell nur ein einziges Mal durchgeführt werden kann, weil danach die Papille durch den endoskopisch ausgeführten Schnitt eröffnet und somit für nachfolgende Papillotomie-Übungen nicht mehr verwendbar ist.

Ein weiterer Nachteil besteht darin, dass der Endoskopiker über sein endoskopisches Bild nur Informationen darüber erhält, was er im Duodenum und an der Papille durchführt. Führt er über die Papille beispielsweise eine Sonde in die Gallengänge oder den Pankreasgang ein, sieht er diese nur im Verlauf zwischen Endoskop und Papille, nicht aber jenseits davon. Zur Überwachung der Vorgänge jenseits der Papille ist zudem ein Röntgengerät erforderlich, das für die ERCP am Menschen Standard ist, das unter tierexperimentellen Bedingungen allerdings nicht immer verfügbar ist und zudem spezielle Sicherheitsvorkehrungen zum Strahlenschutz erfordert.

In einem bekanntem ERCP-Modell ist eine Kamera im Bauchraum integriert, die eine durch die Papille eingeschobene Sonde von extern, das heißt außerhalb des Duodenums, auf einem Monitor darstellt. Eine wirklichkeitsnahe Situation ist hier jedoch nicht gegeben.

Zu den genannten Nachteilen kommt, dass bei warmem Wetter nach einiger Zeit ein Verwesungsgeruch des Biomodells einsetzt.

### Künstliche Modelle

Sie sind von der Logistik her weniger aufwändig, sie ermöglichen, teilweise kleinere, für das Training entscheidend wichtige Tier-Organteile in das Modell einzusetzen. Nachteilig bei den Trainingsmodellen für die ERCP ist wie bei den Biomodellen, dass neben der endoskopischen Visualisierung des duodenalen Raumes auch eine röntgenologische Kontrolle des Vorgangs erforderlich ist, was eine aufwändige Röntgenanlage erfordert.

Beispiele für ERCP-Modelle gemäß dem Oberbegriff des Anspruch 1 sind beispielsweise aus der WO 01/88882 A und Pfeifer J W et al: "Applied virtual reality for simulation of endoscopic retrograde cholangio-pancreatography (ERCP)", Medicine meets virtual reality conference, 17. Januar 1996 (1996-01-17), Seiten 36-42, XP001035268, bekannt.

Der vorliegenden Erfindung liegt daher die Aufgabe zugrunde, ein Trainingsmodell zu schaffen, welches die vorgenannten Nachteile vermeidet und auf einfache und kostengünstige Art und Weise ein der Realität möglichst nahe kommendes Üben von Untersuchungs- und/oder Behandlungsmethoden ermöglicht.

Diese Aufgabe wird erfindungsgemäß durch Modell zum Trainieren der endoskopisch retrograden Cholangio-Pankreatikographie mit den Merkmalen des Anspruchs 1 gelöst.

Durch das erfindungsgemäße Ausbilden eines ersten zu untersuchenden und/oder zu behandelnden Bereiches aus einem, zumindest in Richtung der Übungsperson bzw. des Betrachters, durchscheinenden oder durchsichtigen Material kann vorteilhafterweise ein sonst notwendiges Röntgen (inklusive Einbringen von Kontrastmittel) vermieden werden, da die Übungsperson diesen Bereich, vorzugsweise ähnlich einem Monitorbild eines Röntgengerätes gestaltet, unmittelbar wahrnimmt.

In vorteilhafter Ausgestaltung der Erfindung weist das Trainingsmodell wenigstens einen weiteren endoskopierbaren Bereich, beispielsweise ein Modell eines Teilabschnitts des Zwölffingerdarms - im Folgenden Duodenum genannt - auf, welcher mit dem ersten Bereich, beispielweise ein durchsichtiges Modell der Gallen- und/oder Pankreasgänge, über ein Modell einer Papille in Verbindung steht. Hierdurch können auf einfache Art und Weise die unterschiedlichen Untersuchungs- und/oder Behandlungsmethoden geübt werden.

In weiterer Ausgestaltung der Erfindung besteht der wenigstens eine weitere Bereich aus undurchsichtigem oder nicht durchscheinendem Material und/oder ist durch eine Fensterplatte abgedeckt, so dass dieser wenigstens eine weitere Bereich von einer Übungsperson nur über die Optik eines eingeführten Endoskops beobachtet werden kann. Hierdurch kann vorteilhafterweise auf einfache Art und Weise eine der Realität sehr nahe kommende Simulation gewährleistet werden.

Hierbei ist die Fensterplatte beispielsweise so gestaltet, dass das Duodenum und der Anschlussbereich der Papille an den Gang der Bauchspeicheldrüse und der Gallengänge nicht von der Übungsperson eingesehen werden kann. Selbstverständlich sind aber auch andere Abdeckungen, insbesondere eine von der Fensterplatte unabhängige Abdeckplatte, möglich.

Um die Simulation weiter der Realität anzupassen, kann die Fensterplatte des Modells eine Ausnehmung aufweisen, in welcher der wenigstens eine erste Bereich von einer Übungsperson, insbesondere in einer monitorähnlichen Darstellung, beobachtet werden kann.

In bevorzugter Ausgestaltung der Erfindung sind der wenigstens eine erste Bereich und der wenigstens eine weitere Bereich, insbesondere mittels eines Schlittens oder einer Klappeinrichtung, voneinander trennbar ausgebildet, so dass die Verbindung zwischen den Bereichen nur in einer Ruheposition besteht. Hierdurch ist es vorteilhafterweise möglich, die Bereiche aus einer Ruheposition voneinander zu trennen, so dass unterschiedliche Ausführungsformen des wenigstens einen ersten Bereichs, beispielsweise unterschiedliche Gangplatten, und unterschiedliche Ausführungsformen des wenigstens einen weiteren Bereichs, beispielsweise unterschiedliche Zwölffingerdärme (unterschiedliche Positionierung, anatomische Ausgestaltung, etc.) und/oder unterschiedliche Papillen (unterschiedliche Positionierung, anatomische Ausgestaltung, Porusgröße, etc.), in der getrennten Position leichter ausgewechselt werden können. Zudem wird hierdurch ein Eingreifen in das Modell, beispielsweise zum Entfernen eines während der Übung eingebrachten Stents, erleichtert.

In weiterer Ausgestaltung der Erfindung weist der wenigstens eine weitere Bereich zusätzlich zu einer ersten Einlassöffnung für das Einführen eines Endoskops eine weitere, insbesondere der ersten Öffnung in Längsrichtung des weiteren Bereichs gegenüberliegende, Einlassöffnung auf, um anatomischen Besonderheiten, insbesondere nach einer Billroth II-Operation, Rechnung zu tragen.

Das Verbindungselement in Form einer Papille kann in den unterschiedlichen Ausgestaltungen der Erfindung in dem vorzugsweise selbst auswechselbaren Duodenum fest, beispielsweise eingegossen oder aufgeklebt, oder in das Duodenum einsetzbar und damit für sich genommen austauschbar ausgebildet sein. Hierdurch können vorteilhafterweise durch ein Auswechseln einzelner Teile des Modells, beispielsweise des Duodenums, der Gangplatte, der Papille, eine Reihe unterschiedlicher Untersuchungs- und Behandlungsmethoden sowie Übungsmethoden hierfür durchgeführt werden.

In einer Ausgestaltung der Erfindung besteht die Papille aus einem mittels einem Papillotom schneidbaren Material, insbesondere Biomasse, so dass mit diesem Modell eine Papillotomie simuliert werden kann. Vorteilhafterweise kann diese Papille in dem Duodenum bzw. einer Aussparung hierfür, einsetzbar und damit auswechselbar angeordnet sein, so dass nach Durchführung bzw. Simulation einer Papillotomie zur Vorbereitung einer erneuten Simulation statt eines Auswechselns des gesamten Duodenums nur ein Auswechseln der geschnittenen Papille notwendig ist. Die Papille kann hierbei, wie auch in den anderen Ausgestaltungen der Erfindung, in ihrer Position (Abstand, Winkel, etc.), beispielsweise mittels einer elastischen Aufhängung, einstellbar sein.

In einer weiteren Ausgestaltung der Erfindung kann das Duodenum mehrere nach innen in unterschiedlicher Position angeordnete Papillen aufweisen. Hierdurch können beispielweise in einem Übungsgang anatomische Unterschiede einer Papille und damit unterschiedliche Schwierigkeitsgrade ihrer Sondierung trainiert werden.

In bevorzugter Ausgestaltung der Erfindung ist der die Papille tragende Abschnitt des Duodenums (pars descendens) in seiner Längsrichtung, statt der Anatomie entsprechend im Wesentlichen parallel zum Hauptgallengang (Hepatocholedochus), in einem Winkel von 60 Grad bis 120 Grad zu einer Längsachse der Gallen- und/oder Pankreasgänge (bzw. deren Modell) angeordnet. (Der zwischen der pars descendens des Duodenums und dem Magen gelegene Teil des insgesamt c-förmigen Duodenums (pars superior) wurde wegelassen.) Hierdurch kann vorteilhafterweise ein sonst notwendiges Überkreuzen (Bei der ERCP am Patienten überkreuzt und überdeckt das Endoskop auf dem Röntgenbild einen Teil des Hauptgallengangs) des Endoskops bzw. dessen Schafts vor der Gangplatte und damit eine Sichtbeeinträchtigung vermieden werden.

In den unterschiedlichen Ausgestaltungen der Erfindung sind durch die Trennbarkeit der Bereiche vorteilhafterweise auch weitere Simulationen möglich. So kann beispielsweise die Duodenalwand in verschiedene Positionen, ein unterschiedlicher Schwierigkeitsgrad der Gangsondierung oder ein variabler Stentingwiderstand einstellbar sein. Der Stentingwiderstand kann hierbei vorzugsweise durch ein entsprechendes WiderstandsElement im Bereich des Gallengangs/Pankreasgangs eingestellt werden. Selbstverständlich ist es auch denkbar bei bestimmten Ausführungsformen den Schlitten zu verriegeln, um eine feste Verbindung zwischen Papille und den Gängen nicht zu zerstören (beispielsweise bei einem Übungsmodell für die Cannulation). Hier kann die Platte mit dem Fenster verschiebbar gestalten sein, vorzugsweise nach oben und ähnlich wie beim Schlitten mit Rollenauszügen. Dies erleichtert vorteilhafterweise eine Reparatur an der Anschlussstelle der Gänge an die Papille während eines Kurses).

In weiterer Ausgestaltung der Erfindung kann das Trainingsmodell ähnlich einem Röntgenmonitor mit verschiedenen Neigungswinkeln aufstell- oder aufhängbar sein, so dass das Trainingsmodell - entsprechend den realen Bedingungen mit einem Röntgenmonitor und einem Monitor für das Endoskop - wie ein Röntgenmonitor zu dem Endoskopmonitor angeordnet werden kann. Selbstverständlich können zur weiteren Verbesserung einer Röntgensimulation sichtverändernde Mittel an der Fensterplatte oder in Form einer anderen Ausführungsform der Fensterplatte, wie beispielsweise ein Rollo, Lamellen, Fensterladen, Verdunkelungsglas, etc., vorgesehen sein.

Da bei einem Patienten bei der ERCP nicht kontinuierlich, sondern, um die Strahlenbelastung zu vermindern, nur intermittierend geröntgt wird, muss ein Arzt darauf trainiert werden, mit möglichst wenig Röntgen-Darstellung auszukommen. Dies kann am Trainingsmodell simulieren werden, indem das Fenster mit einem "Fensterladen", Rollo oder ähnlichem ausstattet ist. Wenn der Übende beispielsweise auf einen Fußschalter tritt (analog zum Röntgen) geht das Fenster auf und schließt sich dann wieder. Im Ruhezustand sind die Gänge demzufolge verdeckt. Der Rolloeffekt entsprechend in dieser Ausführungsform dem intermittierenden Einschalten des Röntgens.

Da in einer Ausführungsform der erste Bereich bzw. die Gänge mit "Kontrastmittel" instilliert werden (beispielsweise Modell "selektive Gangdarstellung und multiplen Papillen") läuft reichlich Flüssigkeit in den weiteren Bereich bzw. in das Duodenum zurück (ebenso beim Spülen der Linse des Endoskops, das mit reichlich Wasser erfolgt). Um zu verhindern, dass die Flüssigkeit auf den Boden tropft, kann eine Ablaufvorrichtung, beispielsweise in Form einer Rinne vorgesehen sein. Die Ablaufrinne ist hierzu beispielsweise am Schlitten unterhalb, entlang des weiteren Bereichs, insbesondere des Duodenums, angebracht und seitlich flüssigkeitsdicht abgeschlossen. Die Flüssigkeit in der, vorzugsweise seitlich etwas überstehenden, Ablaufrinne kann beispielsweise über ein Loch in einen außen auf der Rinne angebrachten Stutzen, von dort in einen aufgesteckten Schlauch und schließlich in ein Auffanggefäß ablaufen. Alternativ kann in das Duodenum unten eine kleine, beispielsweise dreieckige, Barriere gegen das Wasser einklebt sein und das Wasser durch ein Loch im Duodenum unten abgeleitet werden.

Weitere vorteilhafte Ausgestaltungen der Erfindung ergeben sich aus den Unteransprüchen.

Die Erfindung wird nachfolgend anhand in der Zeichnung dargestellter Ausführungsbeispiele näher erläutert.

In der Zeichnung zeigen:
- Fig. 1: eine Frontansicht eines Trainingsmodells nach der Erfindung;
- Fig. 2: eine Frontansicht einer Fensterplatte eines Trainingsmodells nach Fig. in Einzeldarstellung;
- Fig. 3: eine Frontansicht einer Gangplatte eines Trainingsmodells nach Fig. 1 in Einzeldarstellung;
- Fig. 4: eine Frontansicht eines Trainingsmodells ohne Fensterplatte nach Fig. 1;
- Fig. 5: eine Frontansicht eines Trainingsmodell ohne Fensterplatte nach Fig. 4 mit ausgezogenem Schlitten;
- Fig. 6: eine vergrößerte Darstellung einer Einzelheit aus Fig. 5;
- Fig. 7: eine Frontansicht eines Trainingsmodells ohne Gangplatte nach Fig. 4 mit ausgezogenem Schlitten;
- Fig. 8: eine Frontansicht eines Trainingsmodells ohne Gangplatte nach Fig. 4 mit eingeschobenem Schlitten;
- Fig. 9: eine Seitenansicht auf ein Trainingsmodell nach Fig. 8;
- Fig. 10: eine perspektivische Rückansicht auf ein Trainingsmodell nach Fig. Fig. 8;
- Fig. 11: eine perspektivische Ansicht eines Schlittens eines Trainingsmodells nach Fig. 7 und Fig. 8 ohne Duodenummodell;
- Fig. 12: eine Ansicht einer Halterung und eines Duodenummodells in ausgebreitetem Zustand;
- Fig. 13: eine Seitenansicht eines Duodenummodells in seiner Halterung;
- Fig. 14: eine Unteransicht (bzw. Rückansicht) eines Schlittens nach Fig. 11;
- Fig. 15a: eine vergrößerte Ansicht auf eine Innenseite eines Duodenummodells mit erweiterter Papille
- Fig. 15b: eine vergrößerte Ansicht auf eine Innenseite eines Duodenummodells nach Fig. 12;
- Fig. 16: eine vergrößerte Frontansicht auf ein Duodenummodell in seiner Halterung nach Fig. 13;
- Fig. 17: eine vergrößerte perspektivische Ansicht auf die Papille einer Innenseite eines Duodenummodells nach Fig. 15 mit eingeschobener Papille;
- Fig. 18: eine vergrößerte Ansicht auf die Papille des Duodenummodells nach Fig. 12;
- Fig. 19: eine perspektivische Ansicht auf eine zweite Ausführungsform eines ausgezogenen Schlittens mit Halterung und eingeklemmter, in eine Öffnung eines Duodenummodells einsetzbarer Papille;
- Fig. 20: eine perspektivische Ansicht auf einen eingeschobenen Schlitten nach Fig. 19 mit Duodenummodell;
- Fig. 21: eine perspektivische Frontansicht einer zweiten Ausführungsform einer Gangplatte in einem Trainingsmodell ohne Fensterplatte;
- Fig. 22: eine vergrößerte Ansicht des Details A in Fig. 21 mit abgezogenem Verbindungspfropfen;
- Fig. 23: eine vergrößerte Ansicht des Details A in Fig. 21;
- Fig. 24: eine Innenansicht einer zweiten Ausführungsform eines Duodenummodells mit mehreren Papillen in unterschiedlicher anatomischer Anordnung;
- Fig. 25: eine perspektivische Frontansicht einer dritten Ausführungsform einer Gangplatte mit mehreren unteren Gangöffnungen und
- Fig. 26: eine perspektivische Frontansicht eines Trainingmodells mit einer Gangplatte nach Fig. 25 und Duodenummodell nach Fig. 24.

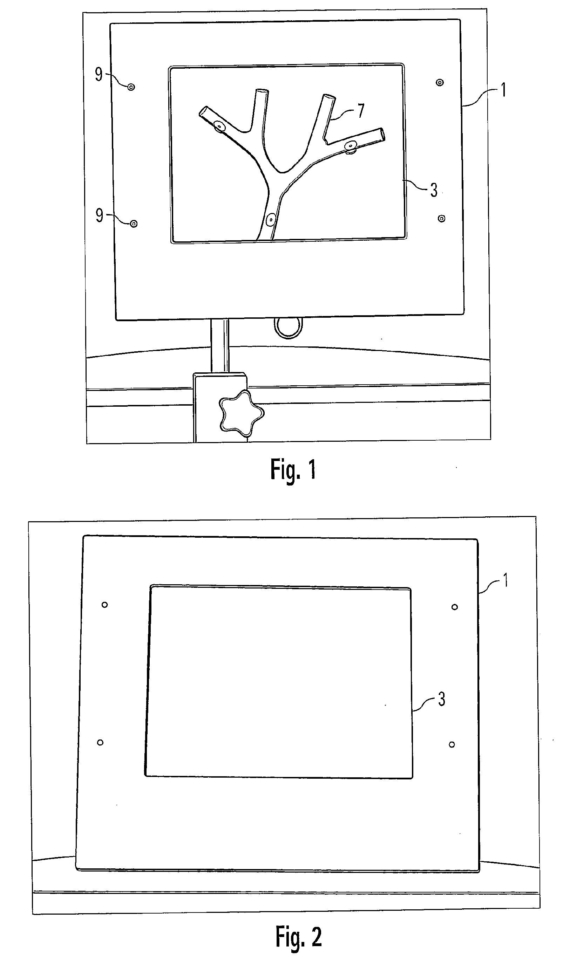

Das in Fig. 1 dargestellte ERCP-Trainingsmodell weist eine in der Zeichenebene liegende rechteckige ebene Abdeckplatte bzw. Fensterplatte 1 von beispielsweise einigen mm Dicke auf, welche eine rechtwinklige, parallel ausgebildete Ausnehmung 3 (Fenster), mit beispielsweise den Abmessungen eines üblichen Monitorbildes, besitzt. In diesem hierdurch gebildeten Sichtfenster können ähnlich dem Monitorbild eines Röntgenapparates das Einführen eines medizinischen Instruments, insbesondere eines nicht endoskopischen Instruments ohne eigene Optik, wie beispielsweise Führungsdraht, Katheder, Sonde, Stent, etc. , sowie zu untersuchende und/oder zu behandelnde innere Körperbereiche, insbesondere Gallen- und/oder Pankreasgänge 7, von einer Übungsperson beobachtet werden.

Hinter dieser Fensterplatte 1 befindet sich eine vorzugsweise auswechselbare Gangplatte 5, auf welcher die menschlichen Gänge 7 (bzw. der dargestellte Gallengang) bzw. Wege der Bauspeicheldrüse (Pankreasgänge) und/oder des Gallenganges angeordnet sind. Sowohl die Fensterplatte 1 als auch die hierzu im Wesentlichen parallele Gangplatte 5 können beispielsweise aus einem Metall oder hartem Kunststoff etc. gefertigt sein, welche lösbar, beispielsweise mittels Schraubverbindung 9, mittelbar oder unmittelbar über etwaige Abstandhalter miteinander verbunden sind. Die vorgenannten Gänge 7 sind aus durchsichtigem oder zumindest durchscheinendem Material, wie beispielsweise Glas, formsteifem oder elastischem Kunststoff geformt, so dass von vorn bzw. in der Draufsicht nach Fig. 1 ein Eindringen eines medizinischen Instruments in die röhrenförmigen Gänge 7 beobachtet werden kann.

Die Gänge 7 können hierzu auf aus der Gangplatte 5 hervorragende Halterungen 17 vorzugsweise nur von der Unterseite angeordnet, beispielsweise aufgeklebt sein, um die Sicht von vorn nicht zu beeinträchtigen.

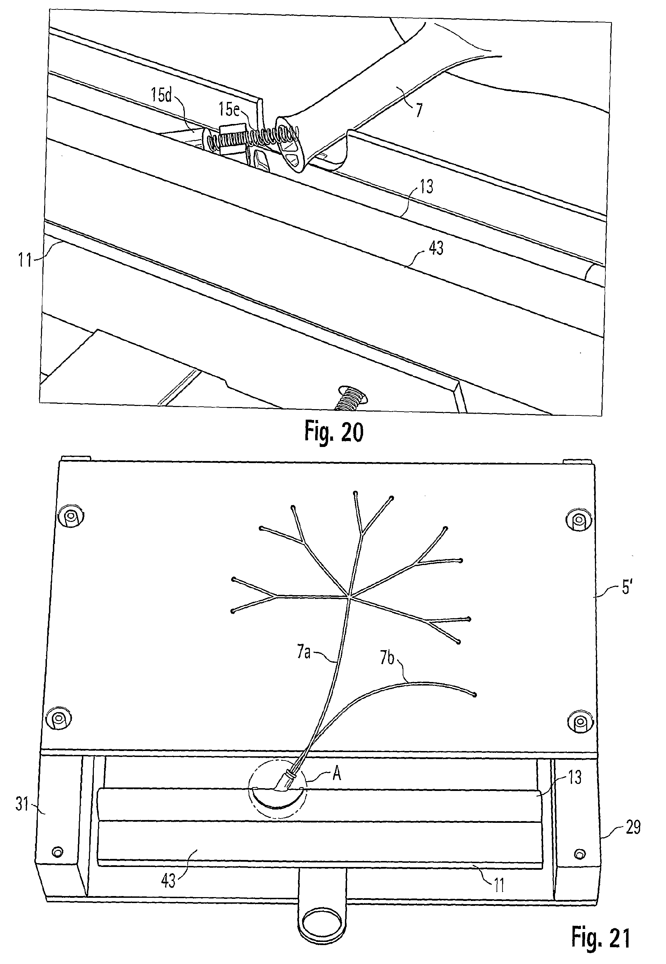

In einer anderen, beispielsweise wie in Fig. 21 dargestellten Ausführungsform einer Gangplatte, sind die Gänge in eine Gangplatte 5' dagegen eingefräst. In diese eingefrästen Gangnuten können, wie in Fig. 21 dargestellt, ein Schlauch 7a, der den Gallengang simuliert, und ein Schlauch 7b, der den Pankreasgang simuliert, eingesetzt sein, oder aber der eingefräste Gang wird durch eine aufgesetzte transparente Platte nach vorn abgeschlossen.

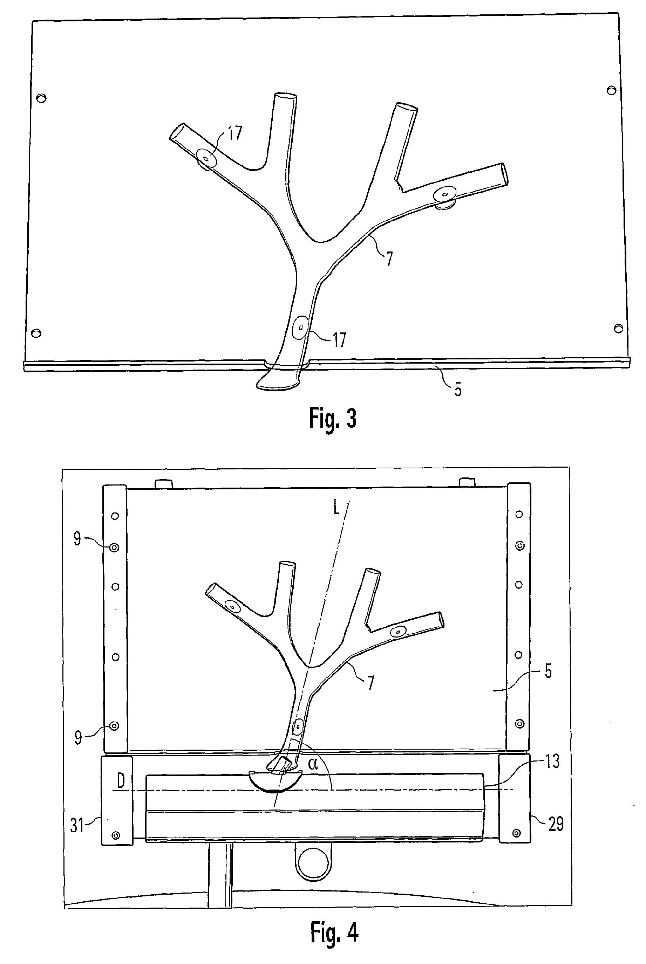

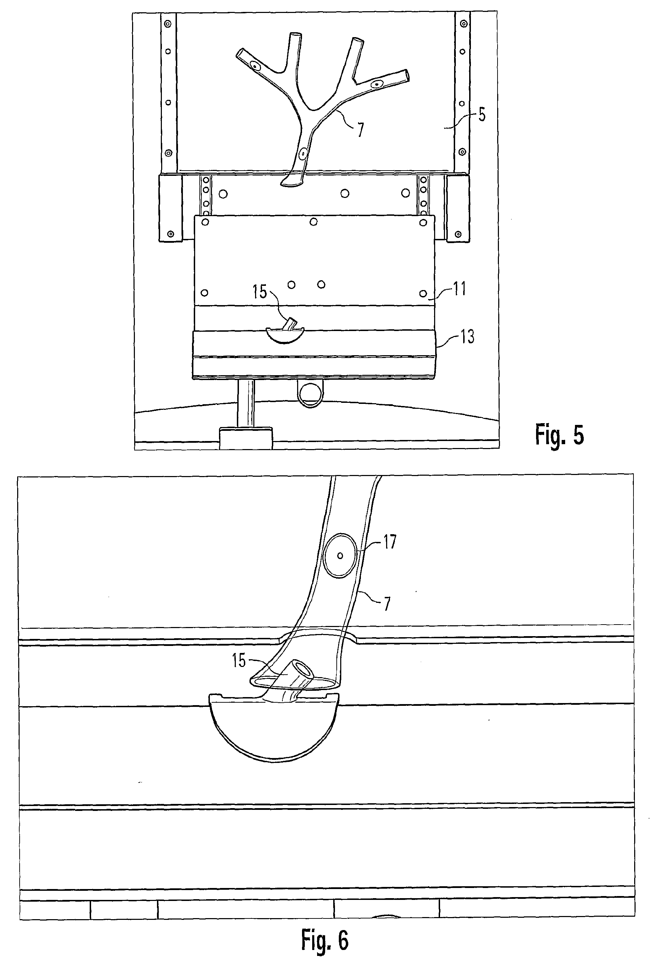

Wie aus Fig. 4 und Fig. 5 ersichtlich, befindet sich unterhalb der rechtwinkligen Gangplatte 5 ein Schlitten 11, welcher in der Zeichenebene nach unten, vorzugsweise parallel zur seitlichen Begrenzung der Gangplatte 5, bewegt bzw. herausgezogen werden kann. Der Schlitten 11 ist hierzu über Teleskopauszüge bzw. Führungsschienen 19 mittelbar oder unmittelbar an der Gangplatte 5 befestigt. Hierdurch kann der Schlitten von einer in Fig. 4 dargestellten eingeschobenen Position in eine in Fig. 5 dargestellte herausgezogene Position bewegt werden.

Auf dem Schlitten 11 können verschiedene Modelle von Zwölffingerdärmen bzw. Teilabschnitten 13 (Duodenummodelle) hiervon, welche in der eingeschobenen Position über eine Papille 15 mit den Gängen 7 in Verbindung stehen, lösbar bzw. auswechselbar in waagrechter Position montiert werden.

Obwohl der Teilabschnitt 13 (pars descendens des Duodenums) in seiner Längsrichtung D statt anatomisch richtig, nämlich in der Zeichenebene im Wesentlichen parallel zur Längsachse L der Gänge 7 (bzw. zu dem noch nicht aufgezweigten Teil des Gallenganges, der Hepatocholedochus), im Trainingsmodell in der Zeichenebene im Wesentlichen senkrecht (beispielsweise mit einem Winkel α von 60 bis 120 Grad) bzw. mit einem allenfalls kleinen Abweichungswinkel (in der Zeichnung nach rechts abweichend) von wenigen Grad, insbesondere kleiner 15 bis 30 Grad, hierzu angeordnet ist, kann hierdurch die verschieden Untersuchungs- und Behandlungsmethoden der ERCP gut simuliert werden (Für das Trainingsmodell ist lediglich die pars descendens des Duodenums verwendet, um weitere Überkreuzungen des Hepatocholedochus mit dem Endoskop zu vermeiden). Vorteilhafterweise wird hierdurch ein die Sicht beeinträchtigendes Überkreuzen des Endoskopschaftes bzw. dessen Einführweges durch Mund, Speiseröhre und Magen vermieden, ohne dass eine Übungsperson hiervon etwas bemerkt.

Wie aus Fig. 4 und Fig. 6 ersichtlich, führt der äußere, beispielsweise rohrstutzenförmige Fortsatz der Papille 15 im eingeschobenen Zustand des Schlittens 11 in eine untere, vorzugsweise trichterförmige, vergrößerte Mündung des inneren Hohlbereiches der Gänge 7 bzw. des Gangmodells hinein. Im herausgezogenen Zustand des Schlittens 11 ist dagegen das Modell des Teilabschnitts des Duodenums 13 mit dem Modell der Papille 15 (im Folgenden nur noch Duodenum 13 und Papille 15 genannt) so weit von der unteren Mündung der Gänge 7 entfernt, dass sowohl der Mündungsbereich als auch der Bereich der Papille 15, beispielsweise zum Auswechseln der Papille 15 oder zum Entfernen eines (Übungs-)Stents aus den Gängen 7, für eine Bedienperson gut zugänglich ist.

Die hohlen bzw. rohrförmigen Gänge 7 bzw. das Y-förmige oder geweihförmige Gangmodell (im folgenden Gänge 7 genannt) sind in der in Fig. 4 bis Fig. 6 dargestellten Variante aus formsteifem, durchsichtigen Material, insbesondere Glas oder Kunststoff, gefertigt.

Im Folgenden werden weitere Ausgestaltungen erläutert, die im Zusammenhang mit dem beanspruchten Gegenstand zu sehen sind.

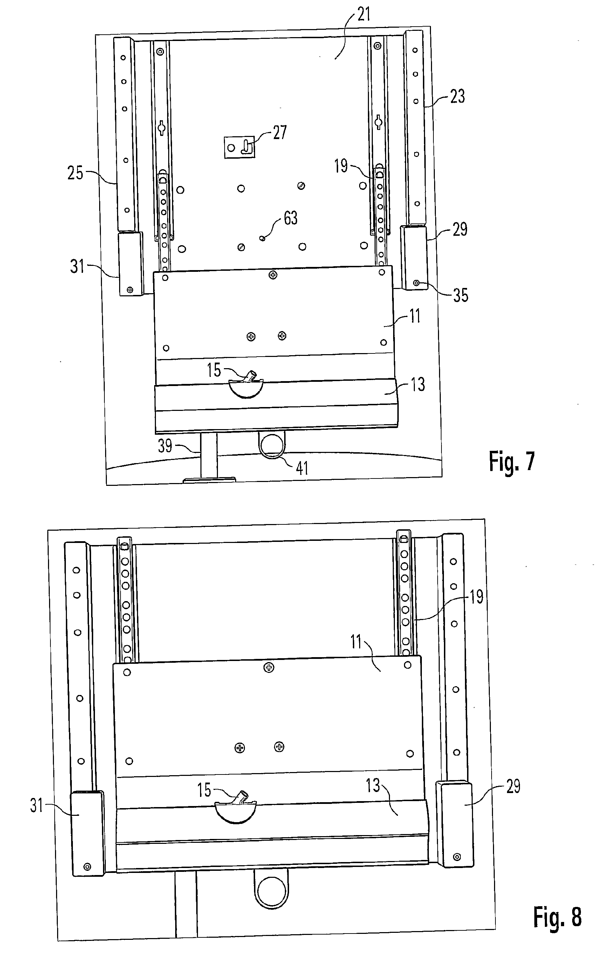

In Fig. 7 wird deutlich, dass das Trainingsmodell rückwärtig vorzugsweise durch eine zur Gangplatte 5 und Fensterplatte 1 parallele Boden- bzw. Rückplatte 21 abgeschlossen ist. Diese Rückplatte 21 bildet mit den senkrecht zur Zeichenebene liegenden Seitenwänden 23 (rechts) und 25 (links) einen U-förmigen Träger, insbesondere in Form eines Gehäuses, für den Schlitten 11, die Gangplatte 5 und die Fensterplatte 1. Die Seitenwände 23, 25 mit im Querschnitt vorzugsweise U-förmigem Profil sind hierzu an ihrer Unterseite mit der Rückplatte 21 fest verbunden, beispielsweise verschraubt, geklebt, geschweißt oder genietet. An ihrer Oberseite sind die Seitenwände 23, 25 mit der Gangplatte 5 zerstörungsfrei lösbar, beispielsweise mittels Schraubverbindung, Rastverbindung, Klettverbindung, etc., verbunden, so dass auf einfache Weise ein Austauschen der unterschiedlichen Ausführungsformen der Gangplatte 5 ermöglicht wird.

In das Duodenum 13 führt ein in Fig. 1 nicht näher dargestelltes, rechtwinklig gebogenes Intubationsrohr zum Einführen eines Endoskops bzw. dessen distaler Spitze mit Schaftbereich, das von links und von rechts in das Modell eingesteckt werden kann, so dass dessen freie Öffnung senkrecht aus der Zeichenebene herausragt.

Das Trainingsmodell weist hierzu rechts- und linksseitige Klemmkloben 29, 31 auf, welche jeweils einen Spalt 33 und eine Klemmschraube 35 besitzen. Hierdurch kann das eine Ende des Intubationsrohrs schwenkbar und eventuell auch in das Gehäuse bzw. die jeweilige Seitenwand 23, 25 hinein verschiebbar festgeklemmt werden, so dass sich die Innenwandung des Intubationsrohrs zum durchgehenden rohrförmig ausgebildeten Hohlraum des Duodenums 13 im Wesentlichen fluchtend anschließt.

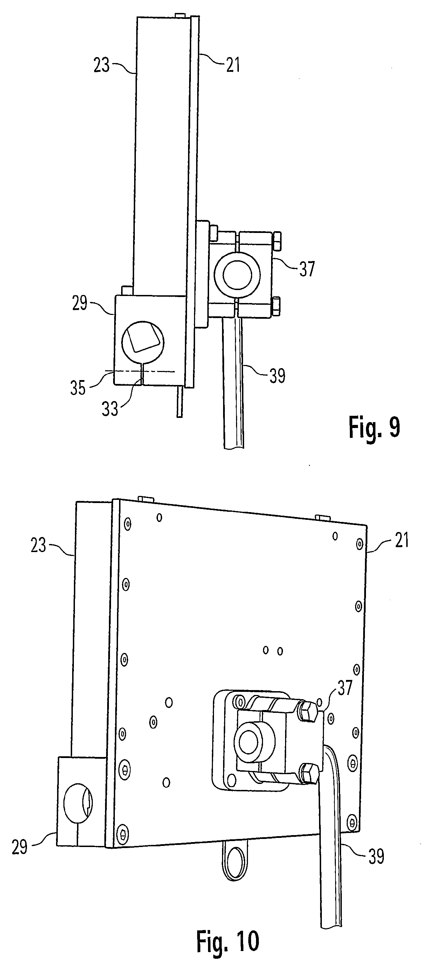

Das Trainingsmodell kann, wie aus Fig. 7 bis Fig. 10 ersichtlich, mit einem Stativ 39 an Tischen, Endoskopie-Gerätewagen etc. angebracht werden. Hierzu weist das Trainingsmodell rückseitig eine Befestigungseinrichtung 37, beispielsweise in Form eines Klemmbackens, für eine Stange eines Stativs 39 mit nicht näher dargestelltem Fuß auf. Selbstverständlich ist es auch denkbar, das Trainingsmodell über eine Befestigungseinrichtung direkt an einer Wand, an einem Gerätewagen oder einem Schrank ortsfest anzubringen.

Wie in Fig. 7 und Fig. 8 dargestellt, sind die beiden vorstehend erwähnten Teleskopauszüge bzw. Schienen 19 parallel zu den Seitenwänden 23, 25 mit ihren Unterseiten an der Vorderseite der Rückplatte 21 angebracht. Die Oberseiten der Schienen 19 sind wiederum an der Rückseite des Schlittens 11 befestigt.

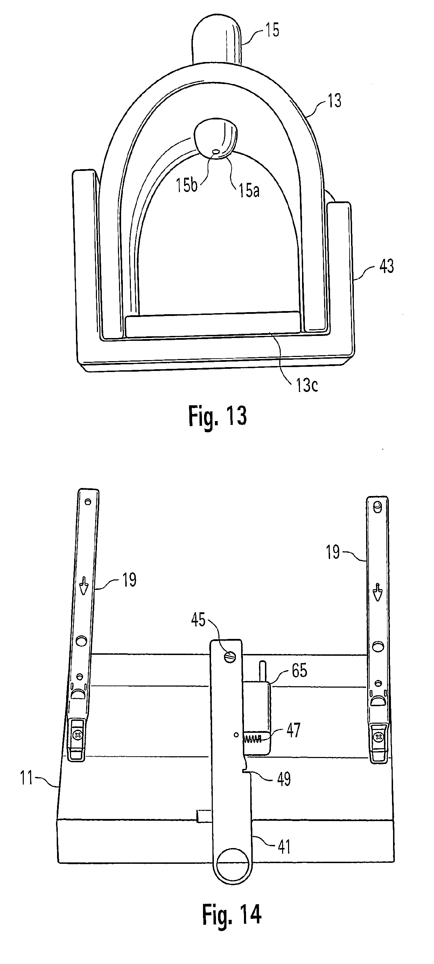

Weiterhin befindet sich in einer für die Papillotomie geeigneten Ausführungsform an der Vorderseite der Rückplatte 21 ein erster Teil einer Steckverbindung, beispielsweise eine Bananensteckerbuchse 27 (weiblich), welche zu einem in Fig. 14 dargestellten, auf der Rückseite des Schlittens 11 angeordneten zweiten Teil der Steckverbindung, beispielweise ein Bananenstecker 65 (männlich), komplementär ausgebildet ist. Die Stecker 27 und 65 sind hierbei jeweils an entsprechender Stelle angeordnet, um bei einem Einschieben des Schlittens 11 den elektrischen Kontakt zu schließen.

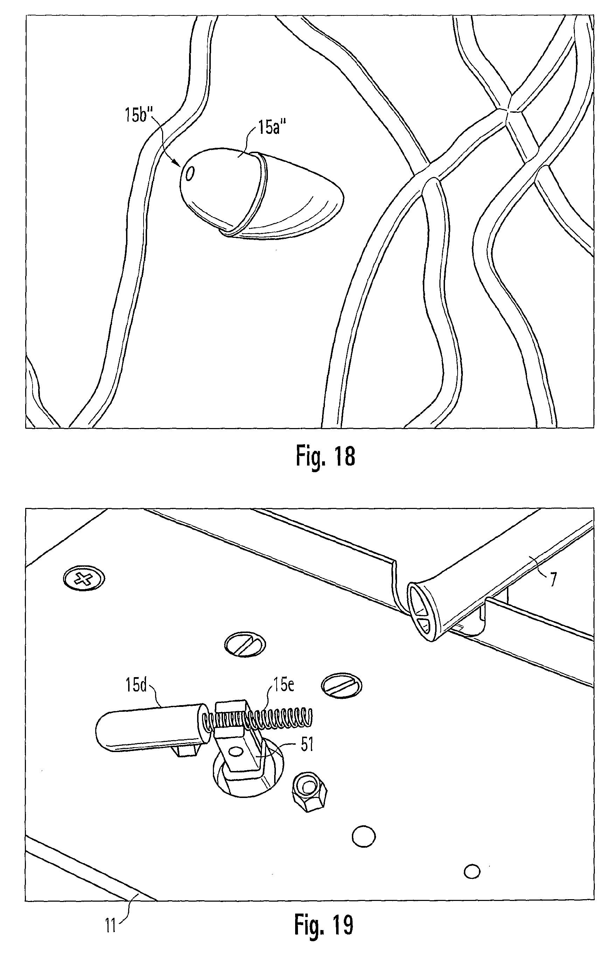

Der Stecker (männlich) 65 ist, wie in Fig. 19 und Fig. 20 dargestellt, mit einer gegenüber dem Schlitten 11 isolierten Papillenhalterung 51 des Papillotomiemodells verbunden. Der Stecker (weiblich) 27 ist mit einem in der Zeichnung nicht näher dargestellten Stromkabel verbunden, welches beispielsweise über eine weitere Steckverbindung oder eine Muffe in der Rückplatte 21 nach außen geführt ist und mit einem Hochfrequenzgenerator verbunden werden kann (Neutralelektrode).

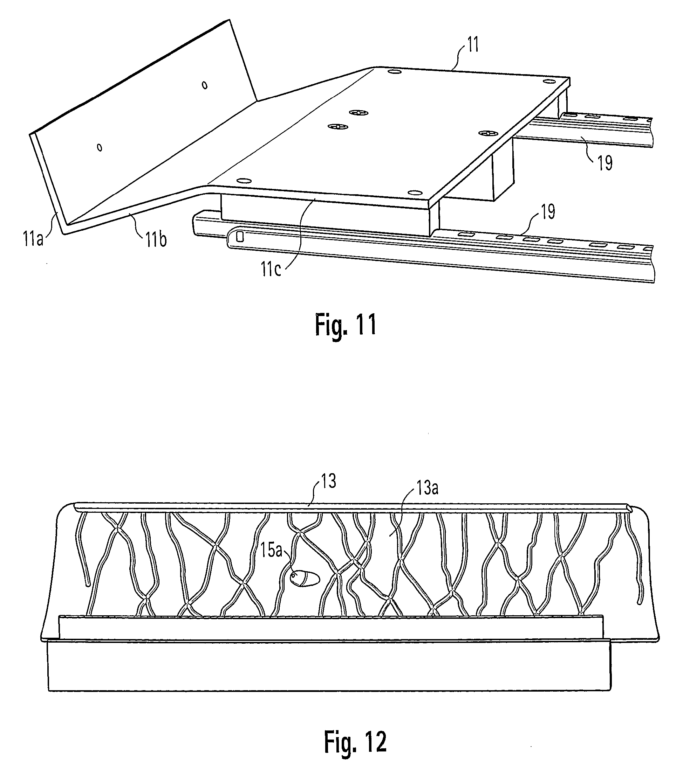

Wie aus Fig. 11 ersichtlich, kann der Schlitten 11 einen zur Gangplatte 5 und Fensterplatte 1 parallelen Bereich 11c aufweisen, an dessen Unterseiten die vorstehend erwähnten Teleskopauszüge 19 befestigt sind. Zur Verbesserung der Zugänglichkeit kann der Schlitten in seiner unteren Hälfte 11b in Richtung zur Zeichenebene leicht abgewinkelt sein, an dessen Ende sich vorzugsweise eine aus der Zeichenebene herausragende, rechtwinklig abgewinkelte Abschlusswand 11a befindet. Auf diesem unteren Bereich des Schlittens 11 kann das Duodenum 13, beispielsweise mittels Schraubverbindung, auswechselbar befestigt werden.

Wie in Fig. 7 und Fig. 8 dargestellt, dient der Schlitten 11 dazu, das Duodenum 13 aus dem Gehäuse herauszuziehen und einzuschieben. Der Schlitten 11 wird hierzu mit einer Zugstange 41 (vorzugsweise mit einem Lochgriff) bewegt.

Die Zugstange 41 ist, wie aus Fig. 14 ersichtlich, an der Unterseite mittels eines Zapfens oder einer Schraube 45 in der Schlittenebene schwenkbar angeordnet, so dass eine kleine seitliche Einkerbung 49 der Zugstange 41 beim Einschieben des Schlittens 11 in einen korrespondierenden, senkrecht aus der Zeichenebene hervorragenden Stift 63 an der Rückplatte 21 (Fig. 7) eingreift und den Schlitten 11 in einer Ruheposition bzw. in das Gehäuse eingeschoben arretiert. In dieser Ruheposition ist ein Übergang vom Duodenum 13 über die Papille 15 zu den unteren Öffnungen der Gänge 7 gewährleistet, wohingegen im herausgezogenen Zustand des Schlittens 11 das Duodenum 13 oder die Papille 15d leicht ausgewechselt werden kann. Um ein Einrasten zu verbessern, kann die Zugstange 41, beispielsweise wie in Fig. 14 dargestellt, mittels einer Zugfeder 47 in Richtung zu dem Stift 63 vorgespannt sein.

Wie in Fig. 12 und Fig. 13 dargestellt, besteht das Duodenum 13 aus einer flach gegossenen, flexiblen, rechteckigen Platte, beispielsweise einer Gummiplatte, die über ihre Schmalseiten U-förmig gebogen in eine Halterung 43 mit U-förmigem, rechtwinkligem Profil eingesetzt und/oder geklebt und unten mit einem, beispielsweise ebenfalls aus Gummi gegossenen, Boden 13c versehen wird. Die Halterung 43 kann beispielsweise wenigstens eine Gewindebohrung aufweisen, so dass sie mittels Schrauben durch entsprechende Bohrungen im unteren Teil 11a oder 11b des Schlittens 11 auf einfache Weise lösbar befestigt werden kann.

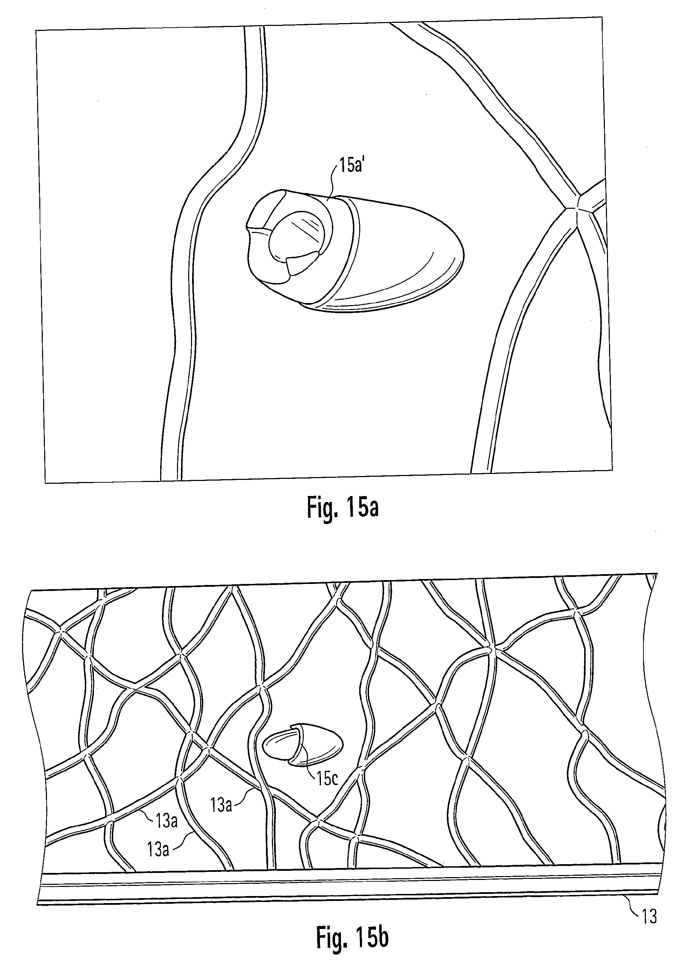

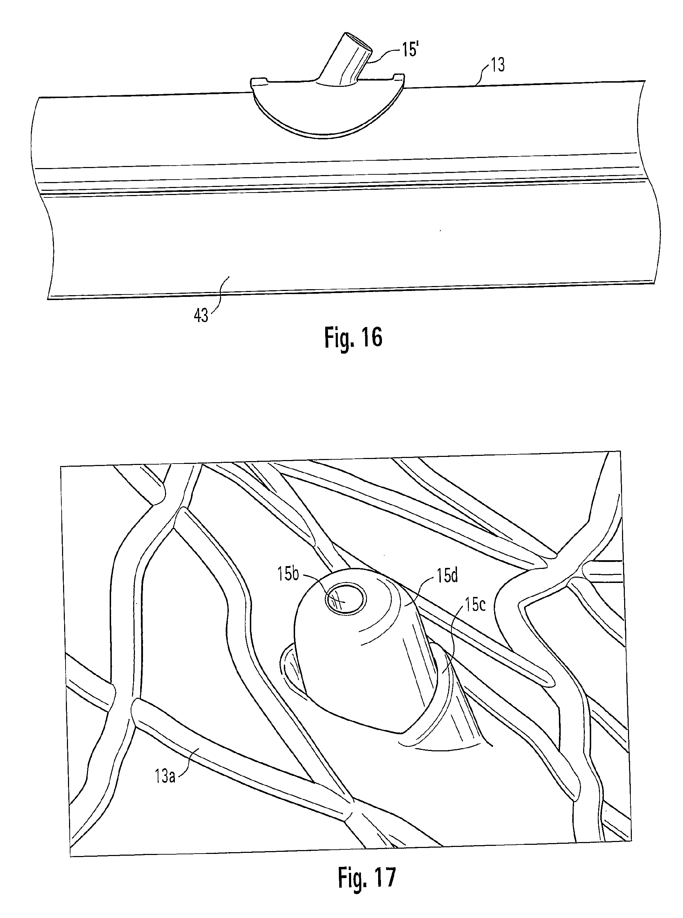

Je nach Verwendungszweck kann das Duodenum 13 unterschiedlich gestaltet sein. Beispielsweise eignet sich ein in Fig. 18 dargestelltes Duodenum mit Papille 15a"' mit engem Porus 15b"für eine selektive Gangsondierung. Dagegen eignet sich ein in Fig. 15a dargestelltes Duodenum mit Papille 15a' mit weitem Porus 15b', der den Zustand nach endoskopischer Eröffnung der Papille 15a" (Papillotomie) simuliert, für eine Stentplatzierung. In ein in Fig. 15b dargestelltes Duodenum mit einer Öffnung 15c anstelle der Papille 15a (nur die Querfalte oberhalb der Papille ist vorhanden) können wiederum, wie in Fig. 17, Fig. 19 und Fig. 20 dargestellt, wechselbare Papillen 15d eingesetzt werden, welche aus elektrisch schneidbarem bzw. leitfähigem Material, beispielsweise aus tierischem Material, bestehen, und sich für die Papillotomie eignen.

Im Folgenden werden weitere Ausführungsformen des erfindungsgemäßen Trainingsmodells mit unterschiedlichen Ausführungsformen von Gangplatten und Duodenummodellen anhand von hiermit durchführbaren Untersuchungs- und/oder Behandlungsmethoden näher erläutert.

### Trainingsmodell für selektive Gangdarstellung und Sondierung

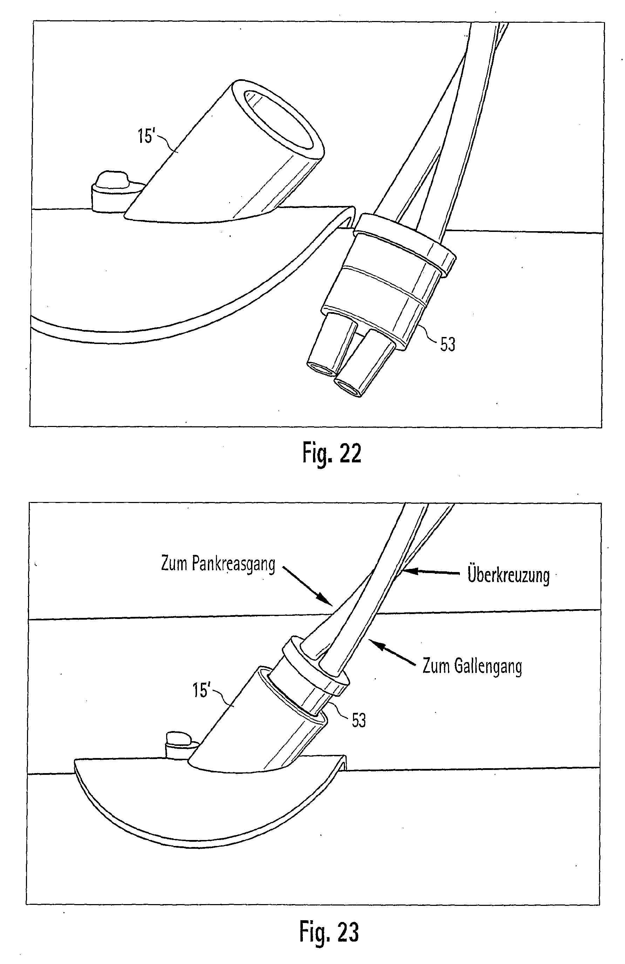

Diese in Fig. 16, Fig. 22 und Fig. 23 dargestellte Ausführungsform dient der Intubation der Papille 15 über ihren Porus mit anschließender selektiver Sondierung der im Inneren der Papille 15 getrennt mündenden Gänge der Gallenwege 7a und des Pankreasganges 7b. Die künstliche, mit dem Duodenum 13 fest oder auswechselbar verbundene Papille 15a", 15d ist innen hohl. Auf der Außenseite des Duodenums 13 ist ein Anschlusselement mit einem Stutzen 15' angebracht, so dass ein Hohlraum entsteht, in den vom Duodenum 13 aus über den Porus 15b, 15b" eine Sonde eingeführt werden kann. In den Stutzen 15' wird ein Verbindungspfropfen bzw. ein Stöpsel 53 eingesteckt, in dem der Gallengang 7a und der Pankreasgang 7b bzw. die diese Gänge simulierenden durchsichtigen Schläuche, insbesondere Kunststoff- oder Silikonschläuche, getrennt münden. Die Gänge 7a, 7b sind mit den Gängen 7a, 7b auf der Gangplatte 5' verbunden (Fig. 21 bis Fig. 23). Um die Anatomie richtig zu simulieren, müssen die beiden Gänge 7a, 7b überkreuzt sein. Durch Variieren des Durchmessers der Gangmündungen in der Papille 15 und durch Versetzen der Mündungen können die unterschiedlichen Verhältnisse bei verschiedenen Patienten simuliert werden. Ziel des Trainings ist, mit der in die Papille 15 eingeführten Sonde die beiden Gänge 7a, 7b mit oder ohne Zuhilfenahme eines Führungsdrahtes getrennt zu sondieren.

Die Anordnung der Gänge 7a, 7b, beispielweise der Gallengänge 7a, kann so erfolgen, dass die verschiedenen Äste nicht gleichzeitig über ihre Aufzweigungen gefüllt werden, sondern beispielsweise nacheinander der rechte und dann der linke Hauptast des Gallengangs 7a. Hierdurch lässt sich die zeitlich versetzte Füllung der Gänge beim Patienten simulieren. Das zeitlich versetzte Füllen der Gänge geschieht infolge der Bauchlage des Patienten, wobei die nach unten ziehenden Gänge infolge der Schwerkraft zuerst und die zum Rücken des Patienten weisenden Gänge dagegen erst dann, wenn die nach unten zur Liege hin gerichteten Gänge voll sind und keine weitere Flüssigkeit mehr aufnehmen können, gefüllt werden.

Weil die Gänge 7a, 7b am Trainingsmodell vorwiegend annähernd senkrecht angebracht sind, würde die eingespritzte Flüssigkeit nach Herausziehen der Sonde aus der Papille 15 der Schwerkraft folgend zurück in das Duodenum 13 laufen. Um dies zu vermeiden, sind in den Schlauch 7a, 7b, der die Gänge simuliert, vorzugsweise auf der Rückseite der Gangplatte 5' und damit von vorn nicht sichtbar, Rückschlagventile an den Schlauchendbereichen angebracht. Die eingespritzte Flüssigkeit kann beispielsweise in einen Sammelbehälter geleitet werden.

Der Schlitten 11 kann bei dieser Ausführungsform arretiert werden, damit nicht die mit der Papille 15 verbundenen Pankreas- bzw. Gallengänge 7a, 7b beim Herausziehen des Schlittens 11 herausgerissen werden. Selbstverständlich ist es auch denkbar, hierzu eine Ausführungsform ohne Schlitten 11 vorzusehen, wobei dann das vorzugsweise winkelförmig gebogene Blech unter Verzicht auf die Teleskopschienen 19 an die Gangplatte 5' montiert werden kann. Diese Möglichkeit besteht auch für die nachfolgend beschriebene Ausführungsform eines Trainingsmodells mit "multiplen Papillen".

### Trainingsmodell mit multiplen Papillen

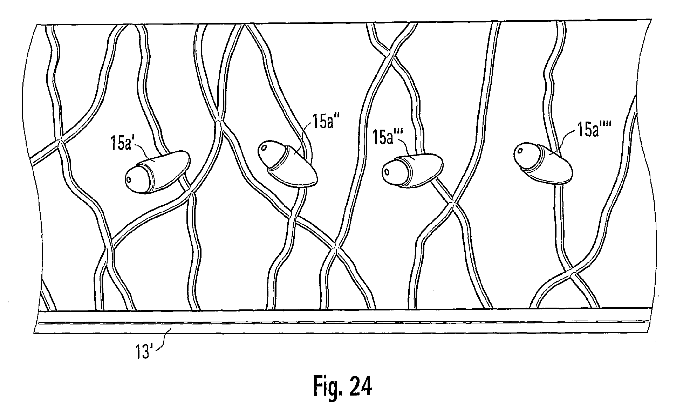

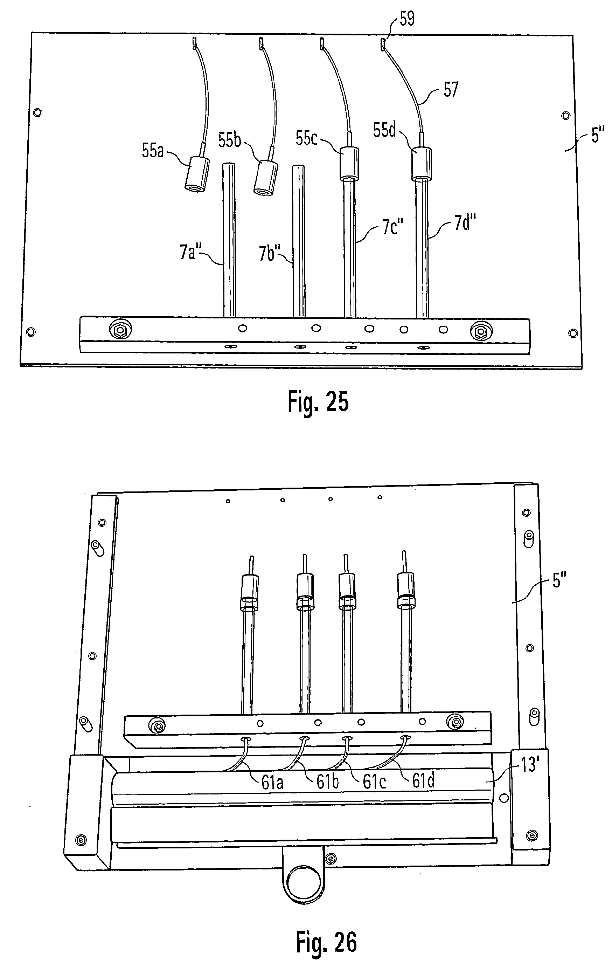

Im in Fig. 24 dargestellten Duodenum 13' sind mehrere Papillen 15a', 15a", 15a"' und 15a"" in verschiedener Position angebracht. So kann die unterschiedliche Anatomie mit unterschiedlich positionierten (realen) Papillen bei verschiedenen Patienten simuliert werden. Die Papillen 15a', 15a", 15a"' und 15a"" sind jeweils mit einem eigenen Röhrchen 7a", 7b", 7c" und 7d" verbunden, das auf der Gangplatte 5" befestigt ist. Die Röhrchen 7a", 7b", 7c" und 7d" sind mit den Papillen 15a', 15a", 15a"' mit einem Verbindungsschlauch 61a, 61b, 61c und 61d verbunden (Fig. 26). Auf die Röhrchen 7a", 7b", 7c" und 7d" können abwerfbare Abschlusspfropfen bzw. Hüte 55a, 55b, 55c und 55d aufgesetzt sein (Fig. 25 und Fig. 26). Wird die jeweilige Papille erfolgreich intubiert, kann mit einem eingeführten Führungsdraht oder durch Einspritzen von Flüssigkeit das zugehörige Hütchen 55a, 55b, 55c und 55d abgeworfen werden. Es sind aber auch andere Varianten zur Erfolgskontrolle möglich. Auch bei dieser Ausführungsform ist der Schlitten arretiert, damit die Papillen 15a', 15a", 15a"' und 15a"" nicht beim Schlittenauszug von den Röhrchen 7a", 7b", 7c" und 7d" getrennt werden.

### Trainingsmodell für Papillotomie

Die Papillotomie, das endoskopische Aufschneiden der Papille 15 mit einem elektrischen Messer (Papillotom), wird beispielsweise durchgeführt, um nachfolgend Steine aus dem Gallengang mit einem Körbchen herausziehen zu können, die sonst die enge Papille nicht passieren könnten. Die Papille muss für diesen Zweck aus einem elektrisch leitfähigen (z.B. tierischen) Material angefertigt sein. Die Papillotomie-Papille 15d ist auf eine Drahtspirale 15e aufgesteckt und kann so in eine spezielle Halterung 51 auf dem Schlitten (Fig. 19) eingedrückt werden. Die beiden Klemmbacken der Halterung 51 können durch eine Schraube einander angenähert und somit an die Drahtspirale 15e angepasst werden. Das Einsetzen und das Auswechseln der papillotomierten Papille 15d erfolgt bei ausgefahrenem Schlitten (Fig. 19). Dies ist möglich, weil keine feste Verbindung zwischen Papille 15d und Gallengang/Pankreasgang 7 besteht. Wird der Schlitten 11 ins Gehäuse eingefahren, schließt sich der Kontakt zwischen der Buchse 27 und dem Bananenstecker 65 (Fig. 7 und Fig. 14), so dass zwischen der Papille 15 d und der Buchse für die Neutralelektrode am Hochfrequenzgenerator ein elektrischer Kontakt hergestellt wird. Zudem fährt der zurückgefahrene Schlitten 11 die Drahtspirale 15e der Papille 15d in den unten trichterförmig erweiterten Gallengang 7 ein (Fig. 20). Dadurch ist es möglich, dass der Endoskopiker die Papille 15d beispielsweise mit Draht oder Papillotom sondieren kann und die genannten Instrumente in den Gallengang 7 vorgeschoben werden können.

Die Papille 15d kann vom Endoskopiker mit dem Papillotom sondiert und dann aufgeschnitten werden. Zum Schneiden wird das Papillotom an eine Stromquelle, den HF-Generator, angeschlossen und über Fußschalter aktiviert. Der Strom fließt über den Schneidedraht des Papillotoms zur Papille 15d und von dort über die Neutralelektrode ab. Der elektrische Schnitt erfolgt durch die hohe Stromdichte am Berührungspunkt von Papillotom und Papille.

### Trainingsmodell für Stenting

Bei dieser Ausführungsform eines Trainingsmodells besteht analog der Ausführungsform für die Papillotomie keine feste Verbindung zwischen den Gallengängen/Pankreasgang 7 und der Papille 15 (Fig. 4). Die mit dem Duodenum 13 verbundene Papille 15 weist eine in Fig. 15a dargestellte Öffnung 15a' auf, die so groß ist, dass ein Stent eingeschoben werden kann (Analogie zur papillotomierten Papille). Auf der Außenseite des Duodenums 13 kann ein Anschlussstück mit Stutzen 15' (Fig. 16) angebracht sein, der den endoskopisch in die Papille 15 eingeschobenen Stent weiterleitet in den Gallengang 7. Nach Platzieren des Stents (Drainageröhrchen, das beispielsweise bei Verengungen von Pankreas/Gallengang zur Wiederherstellung des Abflusses der Galle oder des Pankreassekretes eingesetzt wird) kann somit der Schlitten 11 nach unten aus dem Trainingsmodell herausgezogen werden, so dass der platzierte Stent entfernt werden kann. Wird der Schlitten 11 in das Gehäuse zurückgeschoben, fährt der Stutzen 15' des Anschlussstückes in eine trichterförmige Erweiterung am unteren Ende des Gallengangs 7 ein (Fig. 3, Fig. 4 und Fig. 6), so dass die Papille 15 sondierende Instrumente und Stents in die Gallenwege 7 (analog Pankreasgang) eingeleitet werden.

Bei Patienten kann die Stentplatzierung sehr unterschiedliche Schwierigkeitsgrade aufweisen. Bei hochgradigen derben Verengungen (Tumorstenosen) muss der Stent einen hochgradigen Widerstand überwinden, was besonders für den weniger erfahrenen Endoskopiker schwierig ist. Dies kann simuliert werden, indem in den Gallen- bzw. Pankreasgang 7 Verengungen eingebaut werden, die bezüglich ihrer Lumenweite und Derbheit variiert werden können. Denkbar sind aufblasbare ringförmige Polster, mit einer Feder vorgespannte Verengungen, die je nach Federspannung unterschiedlich wirksam sind, etc.

### Trainingsmodell für Stenosen-Therapie

Die Stenose (Verengung) im Bereich von Gallen- und Pankreasgang wird simuliert durch einen auswechselbaren Einsatz oder durch Kompression eines elastischen Gallen-/Pankreasganges 7 von außen (siehe auch Stenting-Modell). Die Stenosen können durch ein federndes Element in ihrem Stenosierungsgrad einstellbar sein. Alternativ sind auch aufblasbare, ballonähnliche Stenosenelemente möglich; hier kann durch den Fülldruck der Widerstand der Stenose verändert werden.

### Trainingsmodell für BII-Situation

Nach einer Billroth II-Operation erreicht das Endoskop die Papille 15 anatomisch nicht von oben her (bzw. in Fig. 1 von rechts), sondern von unten. Dies macht die Sondierung der Papille 15 ungewohnt und schwieriger. Dieser anatomischen Situation ist bei dem BII-Ausführungsmodell des Trainungsmodells Rechnung getragen. Bei dieser Ausführungsform muss lediglich das Intubationsrohr nicht in den rechten Klemmkloben 29, sondern in den linken Klemmkloben 31 eingesteckt werden (Fig. 4).

## Patentansprüche

1. Modell zum Trainieren der endoskopisch retrograden Cholangio-Pankreatikographie (ERCP), mit
a) wenigstens einem ersten zu untersuchenden und/oder zu behandelnden Bereich (7, 7a, 7b), in welchem das Einführen einer medizinischen, nicht endoskopischen Vorrichtung ohne Optik (Kanüle, Führungsdraht, Katheder, Stent, Sonde) von einer Übungsperson trainiert werden kann,
**dadurch gekennzeichnet, dass**
b) der wenigstens eine erste Bereich (7, 7a, 7b) Gallen- und/oder Pankreasgängen nachgebildet ist und zumindest in Richtung der Übungsperson aus einem durchscheinenden oder durchsichtigen Material besteht, so dass das Eindringen der medizinischen, nicht endoskopischen Vorrichtung von außen für die Übungsperson ohne weiteres Hilfsmittel sichtbar wird,
c) dass das Modell wenigstens einen weiteren, endoskopierbaren Bereich (13) aufweist, welcher im Inneren einem Teilabschnitt eines Duodenums (13) nachgebildet ist und mit dem ersten Bereich (7, 7a, 7b) über ein Modell einer Papille (15) in Verbindung steht, so dass mittels eines in den wenigstens einen weiteren Bereich (13) eingeführten Endoskops und der darin eingeführten medizinischen, nicht endoskopische Vorrichtung der erste Bereich (7, 7a, 7b) untersucht und/oder behandelt werden kann und
d) dass der wenigstens eine weitere Bereich (13) aus undurchsichtigem oder nicht durchscheinendem Material besteht und/oder durch eine Fensterplatte (1) oder eine hiervon unabhängig Abdeckung abgedeckt ist, so dass dieser wenigstens eine weitere Bereich (13) von einer Übungsperson nur über die Optik eines eingeführten Endoskops beobachtet werden kann.

2. Modell nach Anspruch 1, **dadurch gekennzeichnet, dass** die Fensterplatte (1) eine Ausnehmung 3 aufweist, in welcher der wenigstens eine erste Bereich (7, 7a, 7b) von einer Übungsperson, insbesondere in einer monitorähnlichen Darstellung, beobachtet werden kann.

3. Modell nach einem der vorhergehenden Ansprüche, **dadurch gekennzeichnet, dass** der wenigstens eine erste Bereich (7, 7a, 7b) und der wenigstens eine weitere Bereich (13) voneinander trennbar ausgebildet sind, so dass die Verbindung zwischen den Bereichen (13 und 7, 7a, 7b) nur in einer Ruheposition besteht.

4. Modell nach einem der vorhergehenden Ansprüche, **dadurch gekennzeichnet, dass** der wenigstens eine erste Bereich (7, 7a, 7b) auf einer Gangplatte (5) angeordnet oder ausgebildet ist, welche in einem Gehäuse des Modells auswechselbar angeordnet ist.

5. Modell nach einem der vorhergehenden Ansprüche, **dadurch gekennzeichnet, dass** der wenigstens eine weitere Bereich (13) in einem Gehäuse des Modells mittels zerstörungsfrei lösbarer Befestigung, insbesondere Schraubverbindung, Rastverbindung, Klemmverbindung, Klettverbindung, auswechselbar ausgebildet ist.

6. Modell nach einem der vorhergehenden Ansprüche, **dadurch gekennzeichnet, dass** der wenigstens eine weitere Bereich (13) zusätzlich zu einer ersten Einlassöffnung (29) für das Einführen eines Endoskops eine weitere Einlassöffnung (31) aufweist, um anatomischen Besonderheiten Rechnung zu tragen.

7. Modell nach einem der vorhergehenden Ansprüche, **dadurch gekennzeichnet, dass** die Papille (15) als in dem Duodenum (13) fest ausgebildete Papille (15a, 15a', 15a", 15c) oder in das Duodenum (13) einsetzbare und austauschbare Papille (15d) ausgebildet ist.

8. Modell nach einem der vorhergehenden Ansprüche, **dadurch gekennzeichnet, dass** die Papille (15) aus einem mittels einem Papillotom schneidbaren Material, insbesondere Biomasse, besteht.

9. Modell nach einem der vorhergehenden Ansprüche, **dadurch gekennzeichnet, dass** die Position der Papille (15d), insbesondere mittels einer elastischen Aufhängung, einstellbar ist.

10. Modell nach einem der vorhergehenden Ansprüche, **dadurch gekennzeichnet, dass** das Duodenum (13') mehrere, nach innen in unterschiedlicher Position angeordnete Papillen (15a`, 15a", 15a"', 15a"") aufweist.

11. Modell nach einem der vorhergehenden Ansprüche, **dadurch gekennzeichnet, dass** das Duodenum (13, 13') in seiner Längsrichtung (D) statt der Anatomie entsprechend in einem Winkel (α) von 60 Grad bis 120 Grad zu einer Längsachse (L) der Gallen- und/oder Pankreasgängen (7, 7a, 7b) angeordnet ist.

## Claims

1. A model for practising endoscopic retrograde cholangio-pancreatography (ERCP), having
a) at least one first region (7, 7a, 7b) to be examined and/or treated in which the insertion of a medical, non-endoscopic device can be practised by a trainee without optics (cannula, guide wire, catheter, stent, probe),
**characterised in that**
b) the at least one first region (7, 7a, 7b) simulates bile and/or pancreatic ducts and consists, at least in the direction of the trainee, of a translucent or transparent material so that the penetration of the medical, non-endoscopic device becomes visible from outside for the trainee without further aids,
c) the model has at least one further region (13) into which an endoscope can be inserted and which in the interior simulates a partial section of a duodenum (13) and communicates with the first region (7, 7a, 7b) by way of a model of a papilla (15) so that by means of an endoscope inserted into the at least one further region (13) and the medical non-endoscopic device inserted therein the first region (7, 7a, 7b) can be examined and/or treated, and
d) the at least one further region (13) consists of non-transparent or non-translucent material and/or is covered by a window plate (1) or a cover independent thereof so that this at least one further region (13) can be observed by a trainee just by way of the optics of an inserted endoscope.

2. A model according to claim 1, **characterised in that** the window plate (1) has a recess (3) in which the at least one first region (7, 7a, 7b) can be observed by a trainee, in particular in a display similar to a monitor.

3. A model according to one of the preceding claims, **characterised in that** the at least one first region (7, 7a, 7b) and the at least one further region (13) are formed so as to be separable from each other so that the connection between the regions (13 and 7, 7a, 7b) exists only in a rest position.

4. A model according to one of the preceding claims, **characterised in that** the at least one first region (7, 7a, 7b) is arranged or formed on a duct plate (5) which is arranged in a housing of the model in such a way that it can be exchanged.

5. A model according to one of the preceding claims, **characterised in that** the at least one further region (13) is formed in a housing of the model in such a way that it can be exchanged by means of securement that can be undone in a non-destructive manner, in particular a screw connection, latching connection, clamping connection, Velcro® connection.

6. A model according to one of the preceding claims, **characterised in that** the at least one further region (13) has in addition to a first inlet opening (29) for the insertion of an endoscope a further inlet opening (31) in order to take account of anatomical peculiarities.

7. A model according to one of the preceding claims, **characterised in that** the papilla (15) is formed as a papilla (15a, 15a', 15a", 15c) that is fixedly formed in the duodenum (13) or as a papilla (15d) that can be introduced into the duodenum (13) and can be exchanged.

8. A model according to one of the preceding claims, **characterised in that** the papilla (15) consists of a material that can be cut by means of a papillotome, in particular a biomass.

9. A model according to one of the preceding claims, **characterised in that** the position of the papilla (15d) can be adjusted, in particular by means of an elastic suspension.

10. A model according to one of the preceding claims, **characterised in that** the duodenum (13) has a plurality of papillae (15a' , 15a" , 15a"', 15a"") arranged inwardly in different positions.

11. A model according to one of the preceding claims, **characterised in that** the duodenum (13, 13') in its longitudinal direction (D) is arranged, instead of in accordance with the anatomy, at an angle (α) of 60 degrees to 120 degrees with respect to a longitudinal axis (L) of the bile and/or pancreatic ducts (7, 7a, 7b).

## Revendications

1. Modèle pour l'apprentissage de la pratique de la cholangio-pancréatographie rétrograde endoscopique (CPRE ou ERCP), comprenant
a) au moins une première zone (7, 7a, 7b) à examiner et/ou à traiter, dans laquelle une personne stagiaire peut s'entraîner ou s'exercer à introduire un dispositif médical non endoscopique, sans optique, (canule, fil-guide, cathéter, stent, sonde),
**caractérisé**
b) **en ce que** ladite au moins une première zone (7, 7a, 7b) reproduit les voies ou canaux biliaires et/ou pancréatique, et est constituée, au moins en direction de la personne stagiaire, en un matériau translucide ou transparent, de sorte que l'introduction du dispositif médical non endoscopique devient visible de l'extérieur, sans autre moyen auxiliaire, pour la personne stagiaire,
c) **en ce que** le modèle comporte au moins une autre zone supplémentaire (13), qui reproduit à l'intérieur un tronçon partiel d'un duodénum (13) et est en liaison avec la première zone (7, 7a, 7b) par l'intermédiaire d'un modèle d'une papille (15), de sorte qu'il est possible, à l'aide d'au moins un endoscope introduit dans ladite au moins une autre zone supplémentaire (13) et du dispositif médical non endoscopique qui y a été introduit, d'examiner et/ou de traiter la première zone (7, 7a, 7b), et
d) **en ce que** ladite au moins une autre zone supplémentaire (13) est réalisée en un matériau non transparent ou non translucide, et/ou est recouvert par une plaque de fenêtre (1) ou un élément de recouvrement indépendant de celle-ci, de sorte que cette au moins une autre zone supplémentaire (13) ne peut être observée par une personne stagiaire que par l'intermédiaire de l'optique d'un endoscope qui y a été introduit.

2. Modèle selon la revendication 1, **caractérisé en ce que** la plaque de fenêtre (1) comporte un évidement (3) dans lequel ladite au moins une première zone (7, 7a, 7b) peut être observée par une personne stagiaire, notamment à la manière d'une représentation sur écran de visualisation ou moniteur.

3. Modèle selon l'une des revendications précédentes, **caractérisé en ce que** ladite au moins une première zone (7, 7a, 7b) et ladite au moins une autre zone supplémentaire (13) sont réalisées de manière à pouvoir être séparées l'une de l'autre, de sorte que la liaison entre les zones (13 et 7, 7a, 7b) n'existe que dans une position de repos.

4. Modèle selon l'une des revendications précédentes, **caractérisé en ce que** ladite au moins une première zone (7, 7a, 7b) est agencée ou réalisée sur une plaque de voies ou canaux (5), qui est agencée de manière interchangeable dans un boitier du modèle.

5. Modèle selon l'une des revendications précédentes, **caractérisé en ce que** ladite au moins une autre zone supplémentaire (13) est réalisée interchangeable dans un boitier du modèle, au moyen d'une fixation amovible non destructive, notamment une liaison par vis, une liaison par encliquetage, une liaison par serrage, une liaison auto-agrippante.

6. Modèle selon l'une des revendications précédentes, **caractérisé en ce que** ladite au moins une autre zone supplémentaire (13) présente, en plus d'une première ouverture d'entrée (29) pour l'introduction d'un endoscope, une ouverture d'entrée supplémentaire (31) pour la prise en compte de particularités anatomiques.

7. Modèle selon l'une des revendications précédentes, **caractérisé en ce que** la papille (15) est réalisée en tant que papille (15a, 15a', 15a", 15c) formée de manière fixe dans le duodénum (13), ou bien en tant que papille (15d) pouvant être insérée dans le duodénum (13) et interchangeable.

8. Modèle selon l'une des revendications précédentes, **caractérisé en ce que** la papille (15) est constituée d'une matière pouvant être sectionnée ou coupée au moyen d'un papillotome, notamment de la biomasse.

9. Modèle selon l'une des revendications précédentes, **caractérisé en ce que** la position de la papille (15d) est réglable, notamment au moyen d'un accrochage élastique.

10. Modèle selon l'une des revendications précédentes, **caractérisé en ce que** le duodénum (13') présente plusieurs papilles (15a', 15a", 15a"', 15a"") agencées selon différentes positions vers l'intérieur.

11. Modèle selon l'une des revendications précédentes, **caractérisé en ce que** le duodénum (13, 13'), dans sa direction longitudinale (D), est agencé, à la place d'une manière qui correspond à l'anatomie, selon un angle (α) de 60 degrés à 120 degrés par rapport à un axe longitudinal (L) des voies ou canaux biliaires et/ou pancréatique (7, 7a, 7b).
